# EUROPEAN PATENT APPLICATION

(11) **EP 3 739 771 A1**
(43) Date of publication of application: **18.11.2020**
(21) Application number: 19738056.1
(22) Date of filing: 15.01.2019
(51) Int. Cl.: H04B 7/15, B64C 39/02, H04N 7/18, H04Q 9/00

(54) **INFORMATION PROCESSING SYSTEM**

(30) Priority: 15.01.2018 JP 2018004563
(71) Applicant: Hongo Aerospace Inc., Tokyo 113-0033 (JP)
(72) Inventor: KANEDA, Kenya, Tokyo 113-0033 (JP)
(74) Representative: Ström & Gulliksson AB
(86) International application number: PCT/JP2019/000958
(87) International publication number: WO 2019/139173

(57) **Abstract**

The purpose of the present invention is to find a more meaningful method of use of an information processing system that includes a moving body such an unmanned aerial vehicle, by providing the moving body with new functions. One or more transceivers 2 in an information processing system to which the present invention is applied are provided with a communication unit 35 for transmitting transmission information. A drone 1 is provided with a third communication unit 204 for executing control to receive the transmission information transmitted from each of the one or more transceivers 2.

## Description

### TECHNICAL FIELD

The present invention relates to an information processing system.

### BACKGROUND ART

Conventionally, small unmanned aircraft (typically a drone) have been actively researched and developed (see, for example, Patent Document 1).

Patent Document 1: Japanese Unexamined Patent Application, Publication No. 2015-207149

### DISCLOSURE OF THE INVENTION

### Problems to be Solved by the Invention

In an information processing system including a moving body, such as a small unmanned aircraft, however, there has been a request to find a more significant utilization method by providing the moving body with new functions.

The present invention has been made in view of such a situation. It is an object of the present invention to find, in an information processing system including a moving body, such as a small unmanned aircraft, a more significant utilization method by providing the moving body with new functions.

### Means for Solving the Problems

An information processing system according to one embodiment of the present invention includes:
one or more transceivers including a transmission means that transmits transmission information; and
a moving body including a reception control means that carries out control to receive the transmission information transmitted from each of the one or more transceivers.

The transceiver can further include
an information acquisition means that acquires predetermined information, and
the transmission information can include the predetermined information.

The transceiver can further include
a power supply means that stores or generates power required for operating the device itself and supplies the power, and
the predetermined information can include information on the remaining amount of the power stored by the power supply means.

The moving body can further include
a request transmission control means that carries out control to transmit a request signal for requesting the transmission of the transmission information to a predetermined transceiver among the one or more transceivers,
the transceiver can further include
a request receiving means that receives the request signal, and
the transceiver can transmit the transmission information when the request signal is received.

The transceiver can further include an information transmission control means that carries out control to transmit the transmission information at a predetermined date and time.

The moving body is movable within the range of a course or a region set in advance.

The moving body can further include
a position information acquisition means that acquires position information of the device itself,
an image information acquisition means that acquires an image of the surroundings of the device itself as image information, and
an information association means that associates at least one information of the position information and the image information with the transmission information.

### Effects of the Invention

According to these aspects of the invention, in an information processing system including a moving body, such as a small unmanned aircraft, a more significant utilization method can be found by providing a moving body with new functions.

### BRIEF DESCRIPTION OF THE DRAWINGS

FIG 1 is an image view illustrating the outline of processing of an information processing system which is one embodiment of the present invention;
FIG 2 is an image view illustrating the outline of a communication mode between a drone of FIG 1 and a user terminal for operating the drone;
FIG 3 is a block diagram illustrating hardware configurations of the drone of the information processing system of FIG 1;
FIG 4 is a functional block diagram illustrating examples of functional configurations for realizing processing of the drone of FIG. 3 and each of transceivers in the information processing system of FIG 1;
FIG 5 is an image view illustrating patterns of communication between the drone and the transceiver and the outline of communication between the drone and a server of FIG 4;
FIG 6 is an image view illustrating a technique of acquiring information on soil nutrients in each site of a field using the drone of FIG. 4 and the transceiver of FIG 4 disposed at each site of the field; and
FIG 7 is an image view illustrating an example when the transceiver of FIG. 4 is attached to moving animals.

### PREFERRED MODE FOR CARRYING OUT THE INVENTION

Hereinafter, an embodiment of the present invention is described using the drawings.

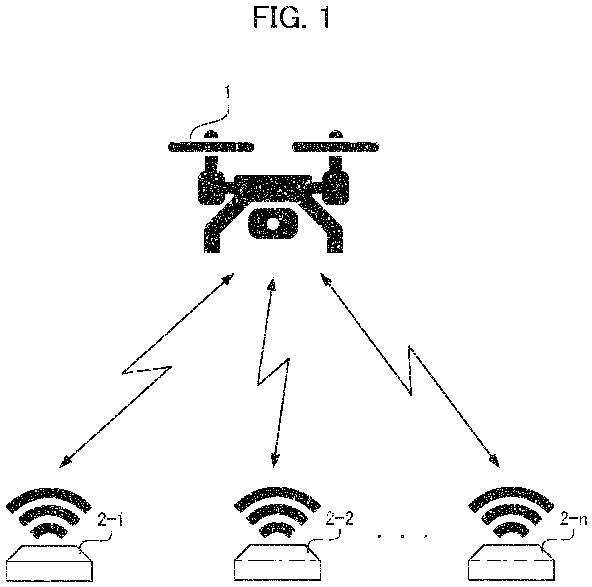

FIG 1 is an image view illustrating the outline of processing of an information processing system which is one embodiment of the present invention.

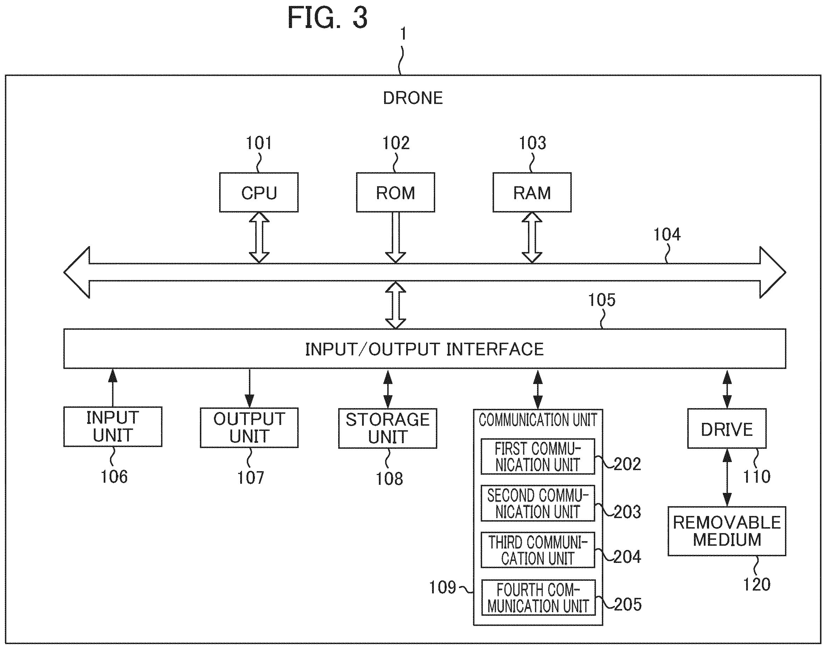

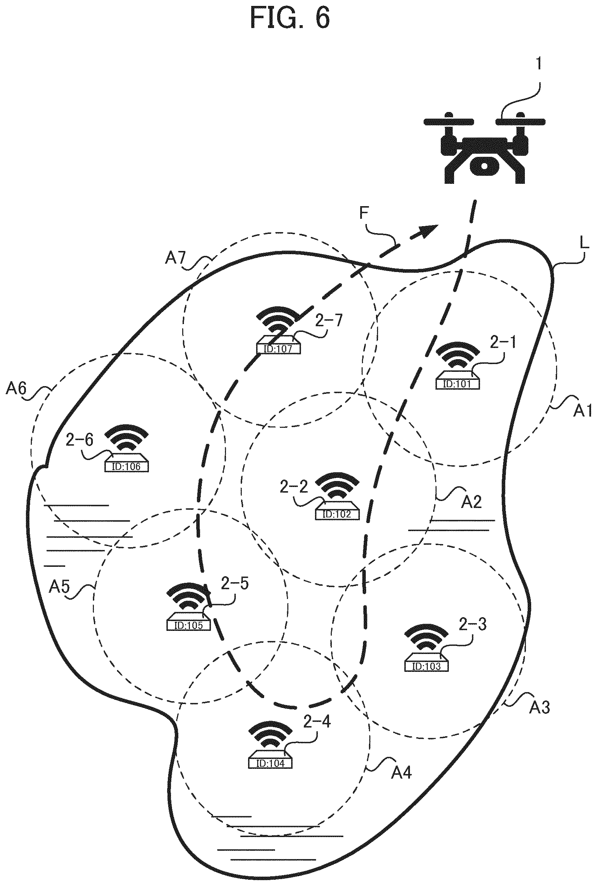

In the information processing system illustrated in FIG 1, a drone 1 exchanges information with transceivers 2-1 to 2-n (n is an arbitrary integer value equal to or larger than 2). When it is not necessary to individually distinguishing the transceivers 2-1 to 2-n from each other, the transceivers 2-1 to 2-n are collectively referred to as "transceiver(s) 2". The drone 1 can acquire identification information, such as an ID, for uniquely identifying each of the transceivers 2-1 to 2-n as information transmitted by each of the transceivers 2-1 to 2-n, respectively. Thus, even when a person possessing the transceiver 2-1 meets with an accident on a mountain, for example, the utilization of the drone 1 by a mountain rescue enables the mountain rescue to efficiently rescue the victim relying on the identification information transmitted from the transceiver 2-1. Further, the drone 1 acquires various kinds of information acquired and transmitted by each of the transceivers 2-1 to 2-n. This enables the drone 1 to efficiently acquire information on soil nutrients at each site of a field L measured by each of the transceivers 2-1 to 2-n disposed at each site of the field L as described later with reference to FIG 6, for example. The information on the soil nutrients at each site of the field L is an example of the information acquired by each of the transceivers 2-1 to 2-n. Each of the transceivers 2-1 to 2-n can acquire all kinds of information. Specifically, information, such as the soil temperature, the soil moisture content, the wind velocity, the wind direction, and the amount of sunlight at each site of the field L, and the like are acquirable. Therefore, the information processing system can also be utilized for the agriculture, forestry, and fishery industries, the construction industry, inventory control, and the like, for example. Functional configurations and contents of specific processing of the drone 1 and the transceivers 2-1 to 2-n are described later with reference to FIG 3 and subsequent drawings.

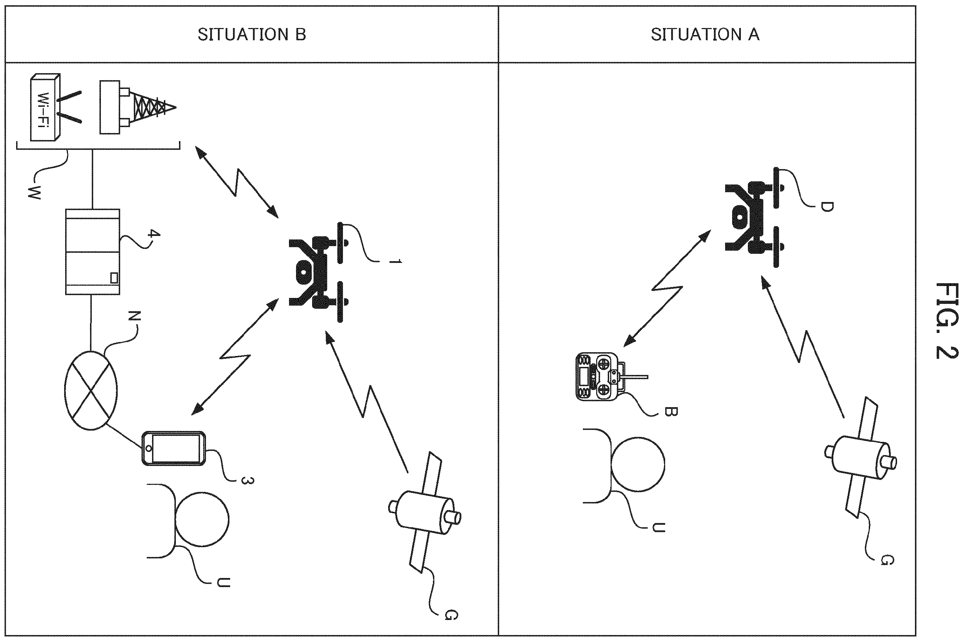

FIG 2 is an image view illustrating the outline of a communication mode between the drone 1 of FIG 1 and a user terminal 3 for operating the drone 1.

Situation A illustrated in FIG 2 is an image view illustrating a case where direct communication is performed between a conventional drone D and a dedicated controller B. In the situation A illustrated in FIG 2, the conventional drone D acquires position information from a GPS (Global Positioning System) satellite G in the sky. The drone D wirelessly transmits the position information and flight information, such as attitude information and rotational motion information, acquired from various kinds of sensors mounted on the drone D to the dedicated controller B operated by a user U. Means that wirelessly transmit the position information and the flight information to the dedicated controller B are not particularly limited and radio waves, infrared rays, laser beams, ultrasonic waves, and the like are usable. Herein, the dedicated controller B transmits a flight control command to the drone D referring to the position information, the flight information, and the like of the drone D based on an operation of the user U. Thus, when communication is performed between the conventional drone D and the dedicated controller B, the flyable range of the drone D is limited to a reachable range of radio waves and the like of the dedicated controller B. Therefore, a request to utilize the drone D in a wider area beyond the reachable range of radio waves and the like of the dedicated controller B cannot be satisfied.

Situation B illustrated in FIG 2 is an image view illustrating a case where communication between the drone 1 and the user terminal 3 of this embodiment is performed directly or via a communication line. When the drone 1 is flying within a reachable range of radio waves and the like of the user terminal 3, communication is directly performed between the drone 1 and the user terminal 3. More specifically, the drone 1 performs operations, such as flight, based on an operation of the user terminal 3 by the user U.

Whereas, when the drone 1 flies in an area outside the reachable range of radio waves and the like of the user terminal 3, the communication between the drone 1 and the user terminal 3 is performed by the following route. More specifically, the GPS satellite G exists in outer space above the flying drone 1, and current position information of the drone 1 is transmitted to the drone 1 from the GPS satellite G Between the drone 1 and Wi-Fi (registered trademark) spot and the like W, various kinds of information are exchanged. The exchanged information is stored in a server 4. Wi-Fi (registered trademark) spot and the like 5 include a radio tower and the like. The drone 1 can automatically fly even when communication is not performed between the drone 1 and the user terminal 3. The automatic flight of the drone 1 is described later.

The user terminal 3 is an information processing terminal operated by the user U and contains a smartphone or the like. The user terminal 3 is connected to the server 4 via a network N, such as the Internet or a portable carrier network, and can obtain the information stored in the server 4. Thus, the user terminal 3 and the drone 1 can communicate with each other via the server 4 through the network N, such as the Internet or a portable carrier network. Such a communication route is referred to as a "route via server" in this specification.

As described above, when the drone 1 is flying within the reachable range of radio waves and the like of the user terminal 3, communication is directly performed between the drone 1 and the user terminal 3 as with the situation A illustrated in FIG. 2. In this case, the user terminal 3 can directly communicate with the drone 1 in real time based on an operation of the user U. The information transmitted from the user terminal 3 is recorded on the server 4 through the network N. Thus, the drone 1 and the user terminal 3 can also directly communicate with each other in real time. Such a direct communication route is referred to as a "direct route" in this specification. The "direct route" has an advantage that real-time communication is enabled but has a disadvantage that a reachable distance of radio waves and the like is limited. Whereas, the "route via server" has an advantage that there is no limitation in the distance between the drone 1 and the user terminal 3 but has a disadvantage that there is generally a slight time lag compared to the real-time communication.

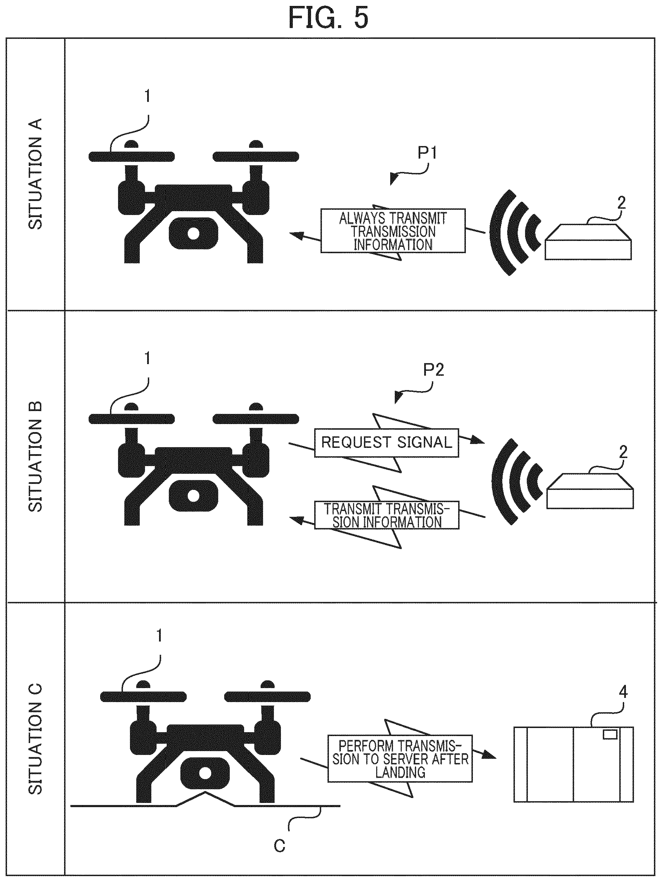

As described above, the drone 1 automatically flies when not communicating with the user terminal 3. Specifically, the drone 1 automatically flies based on the position information obtained from the GPS Satellite G, image information based on an image of the surroundings of the device itself taken with a camera (not illustrated), the flight information obtained from the various kinds of sensors, and the like. More specifically, the drone 1 can fly without utilizing any route of the "route via server" and the "direct route". Therefore, even when the communication between the drone 1 and the user terminal 3 is disabled due to a certain cause, the drone 1 can continue flight without issue. This enables the drone 1 to collect information by an automatic flight function in a region which radio waves and the like do not reach or a region unconnectable to the network N. The information collected by the drone 1 may also be transmitted to the server 4 through the network N after the drone 1 returns and lands in a situation C illustrated in FIG 5 described later.

FIG 3 is a block diagram illustrating hardware configurations of the drone 1 of the information processing system of FIG 1.

The drone 1 includes a CPU (Central Processing Unit) 101, a ROM (Read Only Memory) 102, a RAM (Random Access Memory) 103, a bus 104, an input/output interface 105, an input unit 106, an output unit 107, a storage unit 108, a communication unit 109, a drive 110, and a removable medium 120.

The CPU 101 carries out various kinds of processing according to a program recorded on the ROM 102 or a program loaded to the RAM 103 from the storage unit 108. In the RAM 103, information required for the CPU 101 to perform various kinds of processing and the like are also stored as appropriate.

The CPU 101, the ROM 102, and the RAM 103 are connected to each other through the bus 104. To the bus 104, the input/output interface 105 is also connected. To the input/output interface 105, the input unit 106, the output unit 107, the storage unit 108, the communication unit 109, and the drive 110 are connected.

The input unit 106 contains various kinds of hardware and the like and inputs various kinds of information in response to an instruction and an operation of a user. For example, the input unit 106 inputs the image of the surroundings of the device itself taken with a camera (not illustrated) as the image information. The output unit 107 contains a display, a speaker, and the like and outputs an image and a sound. The storage unit 108 contains a hard disk, a DRAM (Dynamic Random Access Memory), and the like and stores various kinds of information.

The communication unit 109 includes a first communication unit 202, a second communication unit 203, a third communication unit 204, and a fourth communication unit 205. The first communication unit 202 exchanges various kinds of information with the user terminal 3. Communication means between the first communication unit 202 and the user terminal 3 are not particularly limited. For example, communication means, such as a Wi-Fi (registered trademark) which is an internet connection utilizing a wireless LAN, a Bluetooth (registered trademark) which is one of short-range wireless standards for digital instruments, a 3.5th generation mobile communication system (3G high speed), a fourth generation mobile communication system (4G), and LTE (Long Term Evolution), can be adopted. The second communication unit 203 exchanges various kinds of information with the fourth communication unit 205 mounted on a drone board 12 described later. Communication means between the second communication unit 203 and the fourth communication unit 205 are not particularly limited. For example, communication means, such as a Wi-Fi (registered trademark), a Bluetooth (registered trademark), and I2C (Inter-Integrated Circuit) communication to which a physical cable is connected, can be adopted. The third communication unit 204 exchanges various kinds of information with the transceiver 2. Communication means between the third communication unit 204 and the transceiver 2 are not particularly limited. For example, communication means, such as a Bluetooth (registered trademark) and an RFID (radio frequency identifier), can be adopted.

The drive 110 is provided as necessary. In the drive 110, a removable medium 120 containing a magnetic disk, an optical disk, a magneto-optical disk, a semiconductor memory, or the like is placed as appropriate. A program read from a removable medium 30 by the drive 110 is installed in the storage unit 108 as necessary. Further, the removable medium 120 can also store various kinds of information stored in the storage unit 108 as with the storage unit 108.

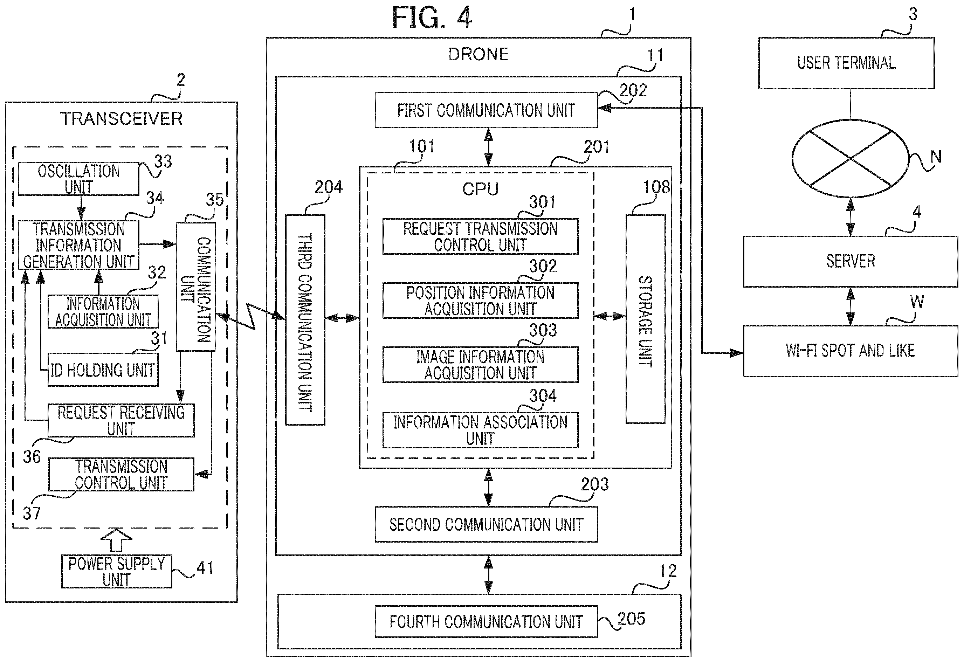

Next, the functional configurations of the drone 1 having such hardware configurations are described with reference to FIG 4.

FIG 4 is a functional block diagram illustrating examples of the functional configurations for realizing processing of the drone 1 of FIG 3 and each of the transceivers 2 in the information processing system of FIG. 1.

In the drone 1, a converter module 11 and the drone board 12 function. The converter module 11 is a module mountable on the drone 1 and contains a control unit 201, the first communication unit 202, the second communication unit 203, and the third communication unit 204. The converter module 11 contains one or more modules. Thus, the use of the converter module 11 enables the user terminal 3 to communicate with a desired drone 1 based on an operation of the user U. Further, in a case of the "route via server", communication is performed through the network N and the server 4 from the user terminal 3, and therefore the communication can be performed without being limited in distance. The converter module 11 can be retrofitted to the conventional drone D in the situation A illustrated in FIG 2. More specifically, the retrofitting of the converter module 11 to the drone D in which the communication means between the drone D and the user terminal 3 is only the "direct route" also enables communication by the "route via server".

The control unit 201 has the CPU 101 and the storage unit 108. For the CPU, an arbitrary CPU may be adopted. However, a CPU capable of performing high-speed processing is preferable because communication needs to be performed in real time between the drone 1 and the user terminal 3. In the CPU 101, a request transmission control unit 301, a position information acquisition unit 302, an image information acquisition unit 303, and an information association unit 304 function. The control unit 201 is customized by recording application programs corresponding to the types of the user terminal 3 and the drone 1. The user terminal 3 for operating the drone 1 by the user U is also customized by a required application program.

The request transmission control unit 301 carries out control to transmit a request signal for requesting the transmission of transmission information to predetermined transceiver(s) 2-m (m is an arbitrary integer value equal to or larger than 1) among the transceivers 2-1 to 2-n. Herein, the transmission information is information transmitted by the transceivers 2. The transmission information includes all kinds of information acquirable by the transceivers 2 as predetermined information. For example, the identification information uniquely identifying the transceivers 2, the information on the soil nutrients of a field, the information on the body temperature of animals, and the like can be included in the transmission information. This eliminates the necessity for the transceivers 2 to always continue to transmit the transmission information, and therefore the power consumption can be reduced. Further, the transceivers 2 can transmit transmission information according to the contents of a request signal from the drone 1, and therefore can individually transmit each of a plurality of kinds of transmission information. The request signal can include a signal requesting the transmission of the identification information uniquely identifying the transceivers 2 and can also include a signal requesting the transmission of the information acquired by the transceivers 2 and the like.

The position information acquisition unit 302 acquires current position information of the device itself transmitted from the GPS Satellite G (FIG 2). The current position information of the device itself acquired by the position information acquisition unit 302 is stored as a history in the storage unit 108.

The image information acquisition unit 303 acquires image information input by the input unit 106. The image information acquired by the image information acquisition unit 303 is stored in the storage unit 108.

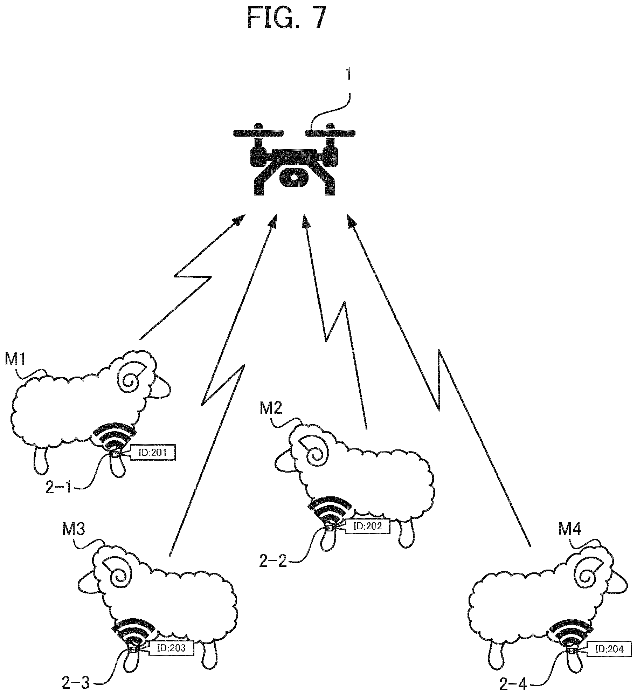

The information association unit 304 associates at least one information of the position information and the image information stored in the storage unit 108 with the transmission information. Various kinds of information associated by the information association unit 304 are stored in the storage unit 108. Thus, the current position of the transceivers 2 can be estimated using the transmission information associated with the position information and the image information of the device itself as a hint as described later with reference to FIG 7, for example.

The first communication unit 202 exchanges various kinds of information between with the user terminal 3 as described above. The second communication unit 203 exchanges various kinds of information with the fourth communication unit 205 mounted on the drone board 12 described later as described above. The third communication unit 204 exchanges various kinds of information with the transceivers 2 as described above. Thus, the information transmitted from the transceivers 2 can be acquired.

The drone board 12 is a board, such as an onboard control circuit of the drone 1. The drone board 12 is mounted with the fourth communication unit 205. The fourth communication unit 205 exchanges various kinds of information with the second communication unit 203 configuring the converter module 11. This makes it possible to utilize the conventional drone D as illustrated in FIG 1 as the drone 1 by retrofitting the converter module 11 to the conventional drone D.

In the transceivers 2, an ID holding unit 31, an information acquisition unit 32, an oscillation unit 33, a transmission information generation unit 34, a communication unit 35, a request receiving unit 36, a transmission control unit 37, and a power supply unit 41 function.

The ID holding unit 31 holds an ID as identification information uniquely identifying the device itself. This enables the transceivers 2 to hold the identification information uniquely identifying the device itself as an example of the transmission information.

The information acquisition unit 32 acquires various kinds of information. As described later with reference to FIG 6, for example, the information acquisition unit 32 acquires the information on the soil nutrients at each site of the field L measured by each of the transceivers 2-1 to 2-n disposed at each site of the field L. A specific technique of acquiring various kinds of information by the information acquisition unit 32 is not particularly limited. For example, various kinds of information may be acquired by various kinds of sensors (not illustrated). Thus, the transceivers 2 can acquire the predetermined information which is a constituent element of the transmission information.

The oscillation unit 33 oscillates a predetermined signal. For example, the oscillation unit 33 can cause a beacon to oscillate a predetermined signal.

The transmission information generation unit 34 generates transmission information transmitted to the drone 1 based on the ID of the device itself held by the ID holding unit 31, various kinds of information acquired by the information acquisition unit 32, and the predetermined signal oscillated by the oscillation unit 33. Specifically, the transmission information including the ID of the device itself, the information on the soil nutrients measured by the transceivers 2, and the information on the remaining amount of the power stored by the power supply unit 41 described later is generated by the transmission information generation unit 34. This enables the user U to operate the drone 1 considering the remaining amount of a battery of the drone 1.

The communication unit 35 transmits the transmission information generated by the transmission information generation unit 34 to the drone 1. Specifically, the communication unit 35 transmits the transmission information by communicating with the third communication unit 204 of the drone 1. Communication means between the communication unit 35 and the third communication unit 204 of the drone 1 are not particularly limited. As described above, communication means, such as a Bluetooth (registered trademark) and an RFID, can be adopted.

The request receiving unit 36 receives a request signal transmitted from the drone 1. When the request signal is received by the request receiving unit 36, the communication unit 35 transmits the transmission information. This eliminates the necessity for the transceivers 2 to always continue to transmit the transmission information, and therefore the power consumption can be reduced. Further, the transceivers 2 can transmit transmission information according to the contents of the request signal from the drone 1, and therefore can individually transmit each of a plurality of kinds of transmission information.

The transmission control unit 37 carries out control to transmit the transmission information at a predetermined time. This enables the transmission of the transmission information to the drone 1 at timing when the transmission information should be transmitted. Therefore, the necessity for the transceivers 2 to always continue to transmit is eliminated. Therefore, the power consumption can be reduced.

The power supply unit 41 stores or generates power required for operating the device itself containing the ID holding unit 31, the information acquisition unit 32, the oscillation unit 33, the transmission information generation unit 34, and the communication unit 35, thereby supplying the power to each unit.

FIG 5 is an image view illustrating a pattern of communication between the drone 1 and the transceiver 2 and the outline of communication between the drone 1 and the server 4.

Situation A illustrated in FIG 5 is a view illustrating a communication pattern in which communication is performed by unilaterally transmitting transmission information by the transceiver 2 and receiving the transmission information by the drone 1 as a communication pattern PI. More specifically, the transmission information is always continuously transmitted from the transceiver 2, and therefore the drone 1 can acquire the transmission information transmitted from the transceiver 2 when the drone 1 just enters a reachable range of radio waves and the like transmitted from the transceiver 2.

Situation B illustrated in FIG 5 is a view illustrating a communication pattern in which a request signal indicating a request to transmit transmission information is transmitted from the drone 1 to the transceiver 2, and then the transceiver 2 transmits the transmission information only when receiving this request signal as a communication pattern P2. More specifically, the transceiver 2 transmits the transmission information only when receiving the request signal transmitted from the drone 1. Therefore, the necessity for the transceiver 2 to always continue to transmit the transmission information is eliminated, and therefore the power consumption can be reduced as described above. Further, the transceiver 2 can transmit transmission information according to the contents of the request signal from the drone 1, and therefore can individually transmit each of a plurality of kinds of transmission information.

Situation C illustrated in FIG 5 is an image view illustrating timing when the transmission information acquired by the drone 1 is transmitted to the server 4. More specifically, the drone 1 in this embodiment transmits the acquired transmission information to the server 4 after landing on a landing port C irrespective of the communication patten, the communication pattern PI or P2 described above. This is an example and the timing when the drone 1 transmits the transmission information to the server 4 is not particularly limited. For example, the drone 1 may transmit the acquired transmission information to the server 4 at timing when the drone 1 is flying.

FIG 6 is an image view illustrating a technique of acquiring the information on the soil nutrients in each site of the field L using the drone 1 of FIG 3 and each of transceivers 2-1 to 2-7 respectively disposed at each site of the field L in the information processing system of FIG. 1.

As illustrated in FIG. 6, each of the transceivers 2-1 to 2-7 is respectively disposed at each site of the field L. A method for arranging each of the transceivers 2-1 to 2-7 at each respective site of the field L is not particularly limited. For example, each of the transceivers 2-1 to 2-7 may be respectively fixed to each of a plurality of posts driven at each site of the field L for arrangement. Thus, transmission information is transmitted from each of the transceivers 2-1 to 2-7 respectively disposed at each site of the field L. Specifically, an ID as identification information for uniquely identifying each of the transceivers 2-1 to 2-7 and information on the soil nutrients at each respective site of the field L measured by each of the transceivers 2-1 to 2-7 are transmitted as the transmission information. For example, from the transceiver 2-1, an ID (101) as identification information for uniquely identifying the transceiver 2-1 and information on the soil nutrients of the field L measured by the transceiver 2-1 are transmitted as the transmission information. From the transceiver 2-2, an ID (102) as identification information for uniquely identifying the transceiver 2-2 and information on the soil nutrients of the field L measured by the transceiver 2-2 are transmitted as the transmission information.

At this time, the transmission information transmitted from each of the transceivers 2-1 to 2-7 cannot be received unless the drone 1 enters areas A1 to A7 which radio waves and the like transmitted from each of the transceivers 2-1 to 2-7, respectively, can reach. Further, there is also a case where the area of the field L is large. Therefore, the drone 1 needs to fly above the field L while minimizing the consumption of the stored power. Therefore, the drone 1 is set in advance to fly in a course where the drone 1 can efficiently pass through all the areas A1 to A7. Specifically, the drone 1 is set in advance to fly in a course F, and therefore can efficiently pass through all the areas A1 to A7. The course may be set such that the drone 1 can fly multiple times within the reachable range of radio waves and the like of the transceivers 2 considering a risk that the drone 1 cannot acquire the transmission information due to natural phenomena, such as the weather, or situations, such as a machine trouble of the drone 1 itself. This can reduce the risk that the drone 1 cannot acquire the transmission information. Further, each of the transceivers 2-1 to 2-7 can transmit the transmission information with high density at predetermined time. Therefore, when a time period in which the drone 1 flies over the course F is determined in advance, each of the transceivers 2-1 to 2-7 may transmit the transmission information according to the time when the drone 1 enters a reachable range of radio waves and the like transmitted from each of the transceivers 2-1 to 2-7 itself. This can reduce the power consumed by each of the transceivers 2-1 to 2-7 supposed to be operated by the power supplied from a battery of the power supply unit 41. Thus, when the transceivers 2 are arranged in the state of being fixed to the predetermined positions, the course where the drone 1 flies can be set in advance or the time when the transceivers 2 transmit the transmission information can be set to scheduled time. Whereas, when the transceivers 2 are attached to moving objects, such as animals, further devices are required for the drone 1 and the transceivers 2.

FIG 7 is an image view illustrating an example when the transceivers 2-1 to 2-4 are attached to moving animals M1 to M4, respectively.

As illustrated in FIG. 7, the attachment of the transceivers 2 to the moving objects, such as animals, facilitates the search of the animals when the animals are lost, the measurement of the body temperature of the animals, and the like. Specifically, from the transceiver 2-1 attached to the animal M1, an ID (201) as identification information for uniquely identifying the transceiver 2-1 and information on the body temperature of the animal M1 measured by the transceiver 2-1 are transmitted as the transmission information. From the transceiver 2-2 attached to the animal M2, an ID (202) as identification information for uniquely identifying the transceiver 2-2 and information on the body temperature of the animal M2 measured by the transceiver 2-2 are transmitted as the transmission information.

Further, the drone 1 can manage the acquired position information of the device itself and image information based on the image of the surroundings of the device itself while associating the acquired information with the transmission information. Thus, even when the animal M4 strays far away, so that the drone 1 deviates from a reachable range of radio waves and the like of the transceiver 2-4 attached to the animal M4, for example, the search based on the transmission information is enabled. More specifically, the drone 1 can estimate the current position of the animal M4 using the transmission information associated with the position information and the image information of the device itself as a hint.

Although one embodiment of the present invention is described above, the present invention is not limited to the above-described embodiment, and alternations, improvements, and the like within the scope where the objects of the present invention can be achieved are included in the present invention.

For example, the embodiment described above adopts the drone as an example of the moving body but can adopt all moving bodies without being limited to the drone. For example, all flying objects including the drone, automobiles, watercrafts, and the like may be acceptable.

Further, in the embodiment described above, the drone 1 acquires the ID as the identification information for uniquely identifying each of the transceivers 2-1 to 2-n among the information transmittable by each of the transceivers 2-1 to 2-n but the ID is merely an example. All kinds of information can be adopted as the identification information insofar as the information can uniquely identify each of the transceivers 2-1 to 2-n.

Further, the embodiment described above adopts the drone as an example of the moving body but can adopt all moving bodies without being limited to the drone. For example, all flying objects including the drone, automobiles, watercrafts, and the like may be acceptable.

Further, the information on the soil nutrients of the field L, the information on the remaining amount of the power stored in the drone 1, the body temperature of the animals M, and the like in the embodiment described above are described as the predetermined information included in the transmission information but are merely examples. All kinds of information acquirable by the transceivers 2 can be adopted as the predetermined information. For example, information acquirable by transceivers 2 embedded into concrete of a bridge or the like (water level and the like of a river) can also be adopted as the predetermined information included in the transmission information.

Further, the Bluetooth (registered trademark) in the embodiment described above may also include BLE (Bluetooth (registered trademark) Low Energy).

Further, in the embodiment described above, the drone 1 can acquire the information, such as the soil temperature, the soil moisture content, the wind velocity, the wind direction, and the amount of sunlight at each site of the field L, and the like, and therefore can also be utilized for the agriculture, forestry, and fishery industries, the construction industry, inventory control, and the like, for example, which are merely examples. In addition thereto, the drone 1 can also be utilized for monitoring of the aquaculture environment of a fish preserve located offshore and the like and monitoring of weather information or aquatic resources in the sea associated with a buoy or the like.

Specifically, each of a plurality of transceivers 2 installed offshore can acquire all kinds of information including information on the ocean, such as the water temperature, nutrients in water, and weather information on water. In such a case, the drone 1 can acquire various kinds of information acquired and transmitted by each of the plurality of transceivers 2. This can reduce cost compared to a method for acquiring information from each of the transceivers 2 through the Wi-Fi (registered trademark) spot and the like 5 installed offshore. More specifically, when information is periodically acquired through the drone 1, the maintenance cost of a mobile telephone line and the like in the case of using the transceivers 2 and the Wi-Fi (registered trademark) spot and the like can be reduced. Further, when the drone 1 acquires information from each of the transceivers 2, the drone 1 does not always need to be connected to the mobile telephone line or the like. It suffices if the drone 1 can transmit the information acquired from each of the transceivers 2 when the drone 1 returns to a port or the like.

Further, in addition thereto, the installation places of the transceivers 2, for example, are not limited to the predetermined positions, such as the field L and offshore. Specifically, the transceivers 2 can be installed on animals to perform tracking of the animals, for example. Thus, even when the animals having the transceivers 2 move, various kinds of information can be acquired from the transceivers 2 by the movement of the drone 1.

Further, the hardware configurations illustrated in FIG 3 are merely examples for achieving the objects of the present invention and are not particularly limited.

Further, the functional block diagram illustrated in FIG 4 is merely an example and is not particularly limited. More specifically, it suffices if the information processing system has a function capable of carrying out the above-described series of processing as a whole, and functional blocks to be used to realize this function are not particularly limited to the example of FIG 4. Further, one functional block may contain only hardware or a combination of hardware and software.

When the processing of each functional block is carried out by software, a program configuring the software is installed in a computer or the like from a network or a recording medium. The computer may be a computer embedded in dedicated hardware. Further, the computer may be a computer capable of carrying out various kinds of functions by installing various kinds of programs, for example, a general-purpose smartphone or personal computer in addition to the server.

A recording medium including such a program contains not only a removable medium distributed separately from a main body of an apparatus in order to provide a program to each user but a recording medium and the like provided to each user in a state of being incorporated in the main body of the apparatus in advance.

In this specification, steps describing programs to be recorded on the recording medium include not only processing performed in chronological order according to the order but processing carried out in parallel or individually, though not necessarily being processed in chronological order.

In summarizing the above, it suffices if the information processing system to which the present invention is applied takes the following configurations and the information processing system can take various kinds of embodiments. More specifically, the information processing system to which the present invention is applied includes:
one or more transceivers (for example, transceiver 2 of FIG 4) including a transmission means (for example, communication unit 35 of FIG 4) that transmits transmission information (for example, ID); and
a moving body (for example, drone 1 of FIG 4) including a reception control means (for example, third communication unit 204 of FIG 4) that carries out control to receive the transmission information transmitted from each of the one or more transceivers. This enables efficient acquisition of the information transmitted from the transceiver 2-1.

Further, the transceiver further includes
an information acquisition means that acquires predetermined information, and
the transmission information includes the predetermined information. This enables the drone 1 to efficiently acquire the information on the soil nutrients at each site of the field L measured by each of the transceivers 2-1 to 2-n arranged at each site of the field L as illustrated in FIG 6, for example.

Further, the transceiver further includes
a power storage means that stores or generates power for operating the device itself and supplies the power, and
the predetermined information includes information on the remaining amount of the power stored by the power storage means. This enables the user U to operate the drone 1 considering the remaining amount of the battery of the drone 1.

Further, the moving body further includes
a request transmission control means that carries out control to transmit a request signal for requesting transmission of the transmission information to a predetermined transceiver among the one or more transceivers,
the transceiver further includes
a request receiving means that receives the request signal, and
the transceiver transmits the transmission information when the request signal is received. This eliminates the necessity for the transceivers 2 to always continue to transmit the transmission information, and therefore the power consumption can be reduced. Further, the transceivers 2 can transmit transmission information according to the contents of the request signal from the drone 1, and therefore can individually transmit each of a plurality of kinds of transmission information.

Further, the transceiver further includes an information transmission control means that carries out control to transmit the transmission information at a predetermined time. This enables the transmission of the transmission information to the drone 1 at timing when the transmission information should be transmitted. Therefore, the necessity for the transceivers 2 to always continue to transmit the transmission information is eliminated. Therefore, the power consumption can be reduced.

Further, the moving body is movable within the range of a course or a region set in advance. This enables the drone 1 to efficiently fly.

Further, the moving body further includes
a position information acquisition means that acquires position information of the device itself,
an image information acquisition means that acquires an image of the surroundings of the device itself as image information, and
an information association means that associates at least one information of the position information and the image information with the transmission information. This enable the drone 1 to estimate the current position of the transceivers 2 using the transmission information associated with the position information and the image information of the device itself as a hint.

### EXPLANATION OF REFERENCE NUMERALS

- 1:: drone
- 2:: transceiver
- 3:: user terminal
- 4:: server
- 11:: converter module
- 12:: drone board
- 31:: ID holding unit
- 32:: information acquisition unit
- 33:: oscillation unit
- 34:: transmission information generation unit
- 35:: communication unit
- 36:: request receiving unit
- 37:: transmission control unit
- 41:: power supply unit
- 201:: control unit
- 202:: first communication unit
- 203:: second communication unit
- 204:: third communication unit
- 205:: fourth communication unit
- 301:: request transmission control unit
- 302:: position information acquisition unit
- 303:: image information acquisition unit
- 304:: information association unit
- A1 to A7:: reachable range of radio waves and the like
- B:: dedicated controller
- C:: landing port
- D:: drone
- F:: course
- G:: satellite
- L:: field
- M:: animal
- N:: network
- U:: user
- W:: Wi-Fi (registered trademark) spot and the like

## Claims

1. An information processing system comprising:
one or more transceivers including a transmission unit configured to transmit transmission information; and
a moving body including a reception control unit configured to carry out control to receive the transmission information transmitted from each of the one or more transceivers.

2. The information processing system according to claim 1, wherein
the transceiver further includes
an information acquisition unit configured to acquire predetermined information, and
the transmission information includes the predetermined information.

3. The information processing system according to claim 2, wherein
the transceiver further includes
a power supply unit configured to store or generate power required for operating a device itself and to supply the power, and
the predetermined information includes information on a remaining amount of the power stored by the power supply unit.

4. The information processing system according to any one of claims 1 to 3, wherein
the moving body further includes
a request transmission control unit configured to carry out control to transmit a request signal for requesting the transmission of the transmission information to a predetermined transceiver among the one or more transceivers,
the transceiver further includes
a request receiving unit configured to receive the request signal, and
the transceiver transmits the transmission information when the request signal is received.

5. The information processing system according to any one of claims 1 to 4, wherein
the transceiver further includes
an information transmission control unit configured to carry out control to transmit the transmission information at a predetermined date and time.

6. The information processing system according to any one of claims 1 to 5, wherein
the moving body moves within a range of a course or a region set in advance.

7. The information processing system according to any one of claims 1 to 6, wherein
the moving body further includes
a position information acquisition unit configured to acquire position information of a device itself,
an image information acquisition unit configured to acquire an image of surroundings of a device itself as image information, and
an information association unit configured to associate at least one information of the position information and the image information with the transmission information.
